# EUROPÄISCHE PATENTSCHRIFT

(11) **EP 1 082 798 B1**
(45) Veröffentlichungstag und Bekanntmachung des Hinweises auf die Patenterteilung: **19.12.2001**
(21) Anmeldenummer: 99936342.7
(22) Anmeldetag: 25.05.1999
(51) Int. Cl.: H02H 7/30

(54) **ELEKTRONISCHE AUSLÖSEEINHEIT FÜR EINEN LEISTUNGSSCHALTER**
ELECTRONIC TRIPPING DEVICE FOR A CIRCUIT BREAKER
UNITE DE DECLENCHEMENT ELECTRONIQUE POUR SECTIONNEUR DE PUISSANCE

(30) Priorität: 28.05.1998 DE 19825384
(43) Veröffentlichungstag der Anmeldung: 14.03.2001
(73) Patentinhaber: SIEMENS AKTIENGESELLSCHAFT, 80333 München (DE)
(72) Erfinder: MÜLLER, Thomas, D-91077 Neunkirchen am Brand (DE); BAUMGÄRTL, Ulrich, D-13599 Berlin (DE); RÖHL, Wolfgang, D-13503 Berlin (DE); HOCHGRAEF, Holger, D-16845 Ganzer (DE)
(86) Internationale Anmeldenummer: DE9901572
(87) Internationale Veröffentlichungsnummer: WO9962159

(56) Entgegenhaltungen:
- US-A- 5 402 299
- US-A- 5 627 713

## Beschreibung

Die Erfindung betrifft eine elektronische Auslöseeinheit für einen zum Ein- und Ausschalten eines Laststromkreises dienenden Leistungsschalter mit folgenden Merkmalen:
- eine Recheneinheit zum Vergleich von Grenzwerten eines Stromes mit einem in dem Laststromkreis fließenden Strom und zur Abgabe eines Auslösesignales zum Ausschalten des Leistungsschalters, wenn eine dem Grenzwert zugeordnete Zeitverzögerung überschritten ist, wobei Wertepaare von Grenzwerten des Stromes und zugeordneten Zeitverzögerungen eine vorbestimmte Auslösekennlinie repräsentieren.

Eine Auslöseeinheit dieser Art ist z. B. durch die
US 5 311 392 A bekanntgeworden. Die Auslösekennlinie ist dabei ein aus mehreren Abschnitten zusammengesetzter Kurvenzug für die Abhängigkeit zwischen einem Strom im Laststromkreis und einer Verzögerung des Auslösesignales, wobei insbesondere für den Überlastbereich ein nichtlinearer Kurventeil zur Nachbildung eines Bimetallauslösers und für sehr hohe Ströme, die auf einem Kurzschluß beruhen, eine feste Ansprechschwelle zur Erzeugung eines unverzögerten Auslösesignales vorgesehen ist.

Sind in einer Anlage der elektrischen Energieversorgung mehrere Leistungsschalter mit Auslöseeinheiten der beschriebenen Art vorhanden, so ist durch eine geeignete Einstellung der Auslöseeinheiten eine gewünschte Koordination der Schutzwirkung der einzelnen Leistungsschalter zu erreichen. Es ist jedoch nicht ungewöhnlich, daß in einer Anlage der Energieversorgung neben Leistungsschaltern mit elektronischen Auslöseeinheiten der genannten Art auch Schmelzsicherungen, insbesondere der Bauart NH (Niederspannung-Hochleistung) bzw. HRC (High Rupturing Capacity) vorhanden sind. Da Schmelzsicherungen im Unterschied zu elektronischen Auslösern eine kontinuierliche Ansprechkennlinie aufweisen, kann es zu unerwünschten Überschneidungen im Verhalten der Schutzorgane (Leistungsschalter und Schmelzsicherungen) kommen. Das Problem einer geeigneten Koordination ist allgemein bekannt und beispielsweise in dem DE-Fachbuch "Low-Voltage Handbook" von Theodor Schmelcher, Siemens AG, 1984, Seiten 84 bis 87, näher beschrieben. Es sind auch Mittel und Verfahren zur Koordinierung von Leistungsschaltern und Schmelzsicherungen bekanntgeworden, z.B. durch die US 4 245 318 A oder die
US 5 402 299 A.

An sich bieten die bekannten elektronischen Auslöser durch ihre vielfältigen Einstellorgane zur Auswahl und Bemessung von unterschiedlichen Parametern die Möglichkeit, die Ansprechkennlinie einer Schmelzsicherung näherungsweise nachzubilden. Hierzu werden Schaltungsteile bzw. Programmroutinen eingesetzt, um Kennlinien mit der Charakteristik I2t, I3t und I4t darzustellen. Die zuverlässige Handhabung solcher Einstellmittel ist aber nur geübten Fachleuten zugänglich, wodurch den Benutzern die erläuterte Koordinierung von Leistungsschaltern und Schmelzsicherungen erschwert ist. Daher ist die Koordinierung ungeachtet der benutzten Hilfsmittel aufwendig und kann zu Fehlern und nachfolgenden Schäden führen.

Der Erfindung liegt hiervon ausgehend die Aufgabe zugrunde, die Koordinierung von Leistungsschaltern und Schmelzsicherungen zu vereinfachen und damit den Schutz elektrischer Anlagen zu verbessern.

Zur Lösung dieser Aufgabe sieht die Erfindung folgende Merkmale vor:
- die Auslöseeinheit enthält eine Schaltungsanordnung zur Bildung einer der Ansprechkennlinie einer Schmelzsicherung entsprechenden Auslösekennlinie, und
- die Auslöseeinheit ist durch ein Nennströme bzw. Bemessungsströme von Schmelzsicherungen repräsentierendes einzelnes Einstellorgan steuerbar.

Für die Projektierung einer Schaltanlage und deren späteren Betrieb ergeben sich hierdurch bedeutende Vereinfachungen. Der Betreiber kann die erforderliche Koordinierung durch direkte Einstellung eines passenden Sicherungs-Nennstromes an dem elektronischen Auslöser vornehmen, wodurch die bisher aufgetreten Fehler vermieden werden. Das Einstellorgan kann sowohl stufenlos als auch auf diskrete Festwerte einstellbar sein.

Eine weitere Verbesserung des Anlagenschutzes ist nach einer Weiterbildung der Erfindung dadurch zu erreichen, daß die Auslösekennlinie unterhalb eines Grenzwertes der Zeit nacheilend abgeknickt ist, derart, daß eine Erhöhung der Selektivitätsgrenze und ein entsprechend erhöhtes nominelles Schaltvermögen des Leistungsschalters eintreten. Diese Merkmale beruhen darauf, daß die Ansprechkennlinien von Schmelzsicherungen in den diese betreffenden Normen nur bis zu einer Ansprechzeit von 100 ms definiert sind und bei kürzeren und in der Praxis wichtigen Zeiten stark schwanken. Der Einsatzpunkt des Knickes der Ansprechkennlinie kann am Auslöser einstellbar sein. Auch kann der Knickpunkt in Abhängigkeit von der Baugröße des Leistungsschalters gewählt sein.

Die Erfindung ist in Verbindung mit elektronischen Auslösern der verschiedensten Art zu verwirklichen. Insbesondere sind Auslöser verwendbar, deren Recheneinheit eine Mikroprozessoreinrichtung umfaßt, zu der ein Programmspeicher für Programmschritte zur taktweisen Verarbeitung von einem Stromsensor erfaßter Ströme im Laststromkreis und deren Vergleich mit einer durch das Einstellorgan ausgewählten Auslösekennlinie entsprechend einer Ansprechkennlinie einer Schmelzsicherung gehört. Dabei kann der Mikroprozessoreinrichtung ein SchreibLesespeicher für Wertepaare von Ansprechwerten für den Strom und zugehörigen Verzögerungszeiten von Schmelzsicherungen unterschiedlicher und mittels der Einstellvorrichtung auswählbarer Schmelzsicherungen zugeordnet sein. Eine weitere geeignete Möglichkeit besteht darin, der Mikroprozessoreinrichtung einen Funktionsgenerator zur mathematisch angenäherten Darstellung von Auslösekennlinien entsprechend den Ansprechkennlinien von Schmelzsicherungen zuzuordnen. Näherungsformeln für die Ansprechkennlinien von Schmelzsicherungen sind in der Fachliteratur bekannt und beispielsweise der DE-Zeitschrift ETZ, 58. Jahrgang, 1937, Heft 25, Seite 684 bis 686 zu entnehmen.

Die Erfindung ist ebenso in Verbindung mit Auslösern der analogen Bauart anwendbar. Dies kann in der Weise geschehen, daß ein analoger Rechenbaustein zum Vergleich analoger Parameter einer mathematischen Näherungsgleichung für die Ansprechkennlinie einer Schmelzsicherung vorgesehen ist und daß das Einstellorgan zur gemeinsamen Veränderung der genannten Parameter ausgebildet ist, wobei wenigstens ein von dem Strom im Laststromkreis abhängiger Parameter und ein von der Wärmebilanz eines ausgewählten Typs einer Schmelzsicherung abhängiger Parameter vorgesehen und der analoge Rechenbaustein beim Erreichen eines positiven Schwellwertes ein Auslösesignal zur Auslösung des Leistungsschalters erzeugt.

Für einen Benutzer erweist es sich als vorteilhaft, wenn das Einstellorgan steckbar ausgebildet ist und an einer Bedienungsfront der Auslöseeinheit eine Aufnahmetasche für das steckbare Einstellorgan angeordnet ist, wobei das Einstellorgan einen einzigen Nennstrom bzw. Bemessungsstrom einer Schmelzsicherung repräsentiert. Ein solches Einstellorgan ist nämlich ebenso verwendbar, wie ein bei Auslöseeinheiten bekannter Bemessungsstromstecker (rating plug) oder wie eine Schraubsicherung.

Wie schon erwähnt, können elektronische Auslöser zahlreiche Einstellorgane ausweisen. Nach einer Weiterbildung der Erfindung kann das steckbare Einstellorgan einen Signalgeber zur Übergabe eines Signales an die Recheneinheit aufweisen, um ausschließlich durch das Einstellorgan bestimmte Auslösekennlinien entsprechend einer Schmelzsicherung zu berücksichtigen und zugleich gegebenenfalls vorhandene weitere Einstellorgane für andere Arten von Auslösekennlinien zu deaktivieren. Damit ist sichergestellt, daß nur die gewünschte Sicherungskennlinie aktiviert ist und nicht durch weitere Einstellungen unbeabsichtigt verändert wird.

Als weitere Maßnahme für einen sicheren Betrieb empfiehlt es sich, daß die Auslöseeinheit und das Gehäuse des Leistungsschalters zusammenwirkende Kodiermittel aufweisen. Insbesondere können das steckbare Einstellorgan einen dem zugeordneten Nennstrom bzw. Bemessungsstrom entsprechenden Paßstift und die Aufnahmetasche eine Paßschraube aufweisen, die einem gewählten zulässigen Bemessungsstrom des Laststromkreises des Leistungsschalters entspricht, derart, daß ein steckbares Einstellorgan mit einem über dem genannten Nennstrom bzw. Bemessungsstrom liegenden Wert nicht in Eingriff mit der Aufnahmetasche zu bringen ist. Diese Anordnung ähnelt der bewährten Benutzung von Paßschrauben bzw. Paßhülsen bei Schmelzsicherungen in Installations-Verteilern.

Schließlich kann das steckbare Einstellorgan zur Verwendung bei einer Auslöseeinheit, die weitere Einstellorgane für nicht der Ansprechkennlinie einer Schmelzsicherung entsprechende Auslösekennlinien aufweist, mit einer die genannten weiteren Einstellorgane abdeckenden Frontblende versehen sein. Diese Anordnung erlaubt es, eine universell einsetzbare Bauform eines elektronischen Auslösers zu schaffen, die sowohl für die bekannten Auslösekennlinien als auch für Sicherungskennlinien geeignet ist, und die dem Benutzer die gewählte Betriebsweise unmittelbar verdeutlicht. In Verbindung hiermit können die Frontblende der Auslöseeinheit und das Gehäuse des Leistungsschalters mit zusammenwirkenden Kodiermitteln versehen sein.

Wie schon erwähnt, können die beschriebenen Einstellorgane ähnlich den bekannten Bemessungsstromsteckern (Rating Plug) gestaltet sein. In diesem Zusammenhang erweist es sich als vorteilhaft, ein Einstellorgan der vorstehend erläuterten Art zugleich als Bemessungsstromstecker auszubilden, wodurch die Handhabung des neuen Schutzsystems der elektrischen Anlagentechnik weiter vereinfacht wird.

Die Erfindung wird im folgenden anhand der in den Figuren gezeigten Ausführungsbeispiele näher erläutert.

Die Figur 1 zeigt die Ansprechkennlinie einer Schmelzsicherung und die Auslösekennlinie eines Leistungsschalters in einem schematischen Diagramm.

Die Figur 2 zeigt ein Blockschaltbild einer elektronischen Auslöseeinheit, die einen Mikroprozessor enthält und der Auslösekennlinie auf die Ansprechkennlinie einer Schmelzsicherung einstellbar ist.

In der Figur 3 ist ein weiteres Ausführungsbeispiel einer elektronischen Auslöseeinheit gezeigt, bei welcher die Auslösekennlinie entsprechend einer Schmelzsicherung durch analoge Schaltungsmittel verwirklicht ist.

Die Figur 4 zeigt eine Bedienfront einer elektronischen Auslöseeinheit mit einem steckbaren Einstellorgan für einen Nennstrom bzw. Bemessungsstrom einer Schmelzsicherung.

In der Figur 5 ist eine Bedienfront einer Auslöseeinheit für zwei Betriebsarten gezeigt. Ein hierfür geeignetes steckbares Einstellorgan, das zugleich eine Abdeckblende für weitere Einstellorgane der Auslöseeinheit aufweist, zeigt die Figur 6.

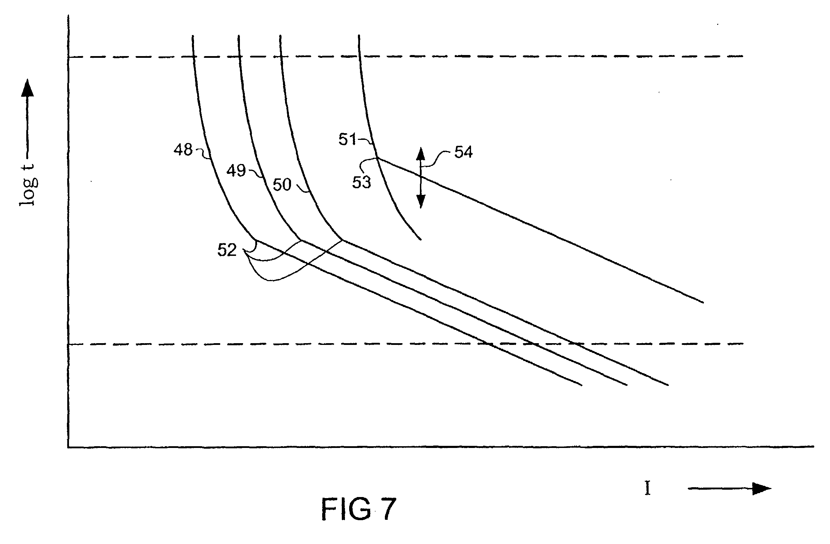

Auslösekennlinien, die Schmelzsicherungen nachgebildet sind und zusätzlich einen Knickpunkt aufweisen, sind in dem Diagramm gemäß der Figur 7 dargestellt.

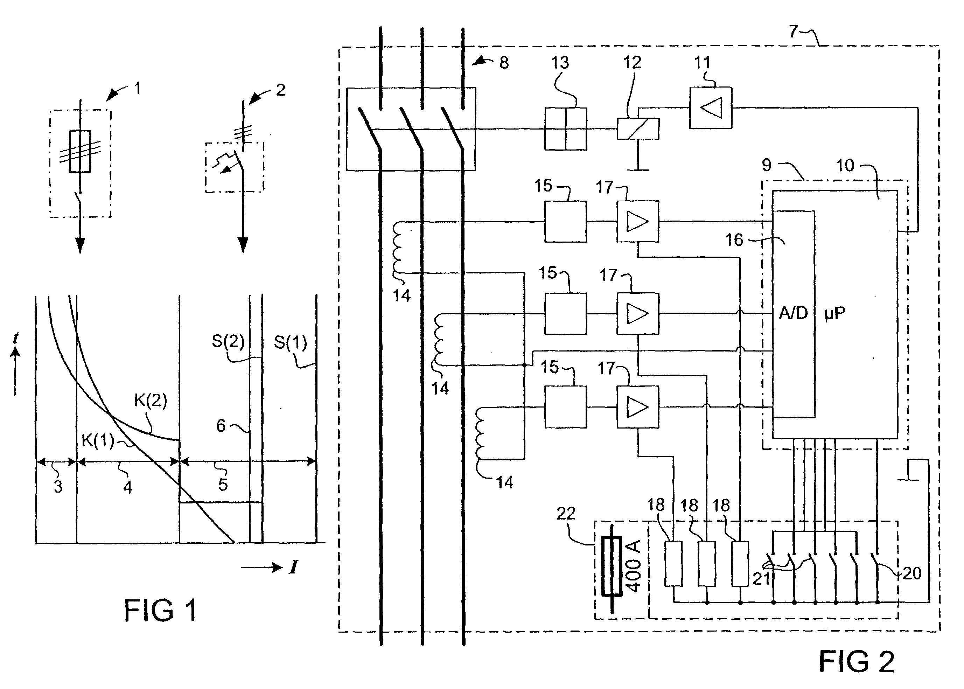

In dem Diagramm gemäß der Figur 1 sind in logarithmischem Maßstab Kennlinien K(1) und K(2) für die Ansprech- bzw. Auslösezeiten einer Schmelzsicherung 1 und eines Leistungsschalters 2 über dem Strom I aufgetragen. Die Darstellung gilt für den Fall, daß der Bemessungsstrom der Schmelzsicherung 1 ebenso groß ist wie der Einstellstrom des Leistungsschalters 2 für thermische Auslösung. Im rechten Teil des Diagramms sind als Parallelen zur Zeitachse das Schaltvermögen S(1) der Schmelzsicherung 1 und S(2) des Leistungsschalters 2 eingetragen. Ferner ist in der Figur 1 als Gerade 6 der höchste am Einbauort zu erwartende Kurzschlußstrom Ik eingetragen. Mit 3 ist der Streubereich für den minimalen Ansprechstrom der Schmelzsicherung 1 bzw. für den minimalen Auslösestrom des Leistungsschalters 2 bezeichnet. Der anschließende Bereich 4 ist der Ansprech- bzw. Auslösebereich für Überlast, während der Bereich 5 für das Verhalten bei Kurzschlußströmen gilt. Wie man erkennt, überschneiden sich die gezeigten Kennlinien K(1) und K(2) oder kommen sich unzulässig nahe, was zu störenden Abschaltungen in Anlagen der Energieversorgung führen kann. Werden andererseits Schmelzsicherungen und Leistungsschalter so ausgewählt bzw. eingestellt, daß es keine Überschneidung gibt, so kann demgegenüber die Schutzwirkung ungenügend oder unnötig stark sein.

Dieses Problem, das insbesondere in Energieversorgungsanlagen großer Gebäude auftritt, wird nach der Erfindung dadurch behoben, daß sich die mit Schmelzsicherungen zu kombinierenden Leistungsschalter auf einfache Weise so einstellen lassen, daß ihre Auslösekennlinie der Ansprechkennlinie einer Schmelzsicherung entspricht. Die nachfolgenden Figuren 2, 3, 4 5 und 6 veranschaulichen geeignete Mittel zu Verwirklichung dieses Gedankens.

Bei dem Ausführungsbeispiel gemäß der Figur 2 wird davon ausgegangen, daß ein mehrpoliger Niederspannungs-Leistungsschalter 7 zur Öffnung von Schaltkontakten in den Hauptstrombahnen 8 mit einer elektronischen Auslöseeinheit 9 ausgerüstet ist. Hierzu umfaßt die Auslöseeinheit 9 in bekannter Weise eine Mikroprozessoreinrichtung 10 (d.h. einen Mikroprozessor und alle zu seinem Betrieb benötigten peripheren Komponenten und Schaltungsteile) sowie einen Ausgangsverstärker 11 zur Steuerung eines Auslösemagneten 12, der ein Schaltschloß 13 betätigt.

Auf Einzelheiten der Betätigung der Schaltkontakte in den Hauptstrombahnen 8, ihre Verklinkung in der Einschaltstellung und ihre Freigabe zur Unterbrechung eines Stromkreises eines Verbrauchers wird an dieser Stelle nicht eingegangen, da diese Einzelheiten allgemein bekannt sind und zum Verständnis der Erfindung nicht benötigt werden.

Der Auslöseeinheit 9 werden Signale zugeführt, die den in den Hauptstrombahnen 8 fließenden Strömen proportional sind. Als Mittel zur Bereitstellung der genannten Signale sind in der Figur 2 eisenlose Stromsensoren 14 mit nachgeschalteten Integrationsverstärkern 15 gezeigt. Die Ausgangssignale der Integrationsverstärker 15 gelangen jedoch nicht direkt zu einem der Mikroprozessoreinrichtung 10 zugeordneten A/D-Wandler 16, sondern durchlaufen einen Normierverstärker 17, dessen Verstärkungsfaktor durch je einen Widerstand 18 für jeden der Normierverstärker 17 bestimmt ist.

Kodierschalter 20 und 21 bilden ein Einstellorgan 22, das eine Umstellung der Auslöseeinheit 9 auf eine Auslösekennlinie entsprechend einer Schmelzsicherung erlaubt. Dabei steuert der Kodierschalter 20 die Auslöseeinheit 9 in der Weise, daß alle sonstigen für Kennlinien entsprechend der Kennlinie K(2) in der Figur 1 benötigten Einstellorgane unwirksam geschaltet werden und statt dessen Ansprechkennlinien von Schmelzsicherungen bereitgestellt werden. Die Nennströme dieser Ansprechkennlinien werden vom Benutzer durch die Kodierschalter 21 im Einstellorgan 22 ausgewählt.

Somit kann der Benutzer der Auslöseeinheit 8 allein durch Betätigung des Einstellorgans 22 erreichen, daß die Schutzwirkung des Leistungsschalters 7 einer Schmelzsicherung mit einem bestimmten Bemessungsstrom entspricht. Dies stellt eine wesentliche Erleichterung gegenüber der bisher für einen vergleichbaren Zweck erforderlichen Vorgehensweise dar. Zugleich wird der Aufbau der Auslöseeinheiten von Leistungsschaltern vereinfacht, weil Schaltungsteile und zugehörige Einstellorgane für Kennlinienabschnitte mit der Charakteristik I3t und/oder I4t entfallen.

In der Figur 2 ist ferner durch einen die Widerstände 18 sowie die Kodierschalter 20 und 21 umfassenden gestrichelt dargestellten Rahmen angedeutet, daß die genannten Bauteile zu dem Einstellorgan 22 zusammengefaßt sind, der somit einen "kombinierten Bemessungsstrom- und Sicherungsstecker" .

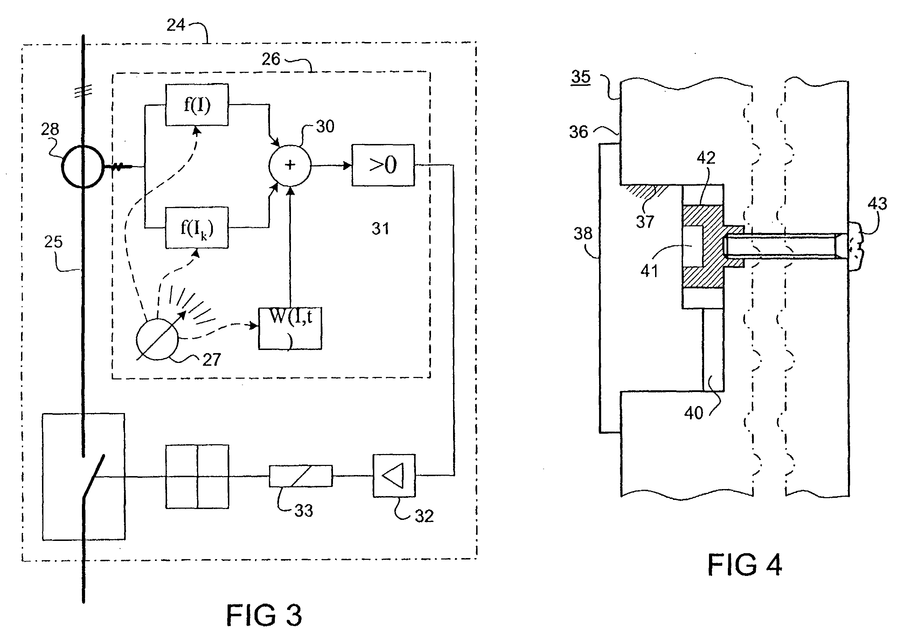

In dem Ausführungsbeispiel gemäß der Figur 2 kann die einer Schmelzsicherung entsprechende Auslösekennlinie durch einen Speicher realisiert sein, der Wertetabellen für die Zuordnung von Strömen und Verzögerungszeiten enthält. Der gleiche Zweck ist durch einen Funktionsgenerator zu erzielen, der kontinuierliche Kennlinien bereitstellt. Die Erfindung ist im übrigen nicht an Auslöseeinheiten gebunden, die einen Mikroprozessor enthalten, sondern kann auch durch analog arbeitende elektronischer Auslöser realisiert werden. Dies wird im folgenden anhand der Figur 3 erläutert.

In der Figur 3 ist in vereinfachter einpoliger Darstellung ein Niederspannungs-Leistungsschalter 24 mit einer Hauptstrombahn 25 veranschaulicht, der mit einer analog wirkenden elektronischen Auslöseseinheit 26 ausgerüstet ist. Diese dient speziell zur Nachbildung der Ansprechkennlinien von Schmelzsicherungen und weist hierzu ein einziges Einstellorgan 27 auf, das zur Nachbildung der Ansprechkennlinien gemeinsam drei Funktionswerte beeinflußt, nämlich eine von dem mittels eines Stromwandlers 28 gemessenen Strom I abgeleitete Größe f(I), eine vom Kurzschlußstrom abhängige Größe f(Ik) und ein vom Strom I und von der Zeit t abhängige Größe W für die Wärmeabfuhr der nachzubildenden Schmelzsicherung. Die genannten Größen werden in einem Addierer 30 summiert und ergeben im normalen Betrieb einen negativen Wert. Wird dagegen am Addierer 30 mittels eines Komparators 31 ein positiver Wert festgestellt, so bedeutet dies, daß eine Überlast oder ein Kurzschluß vorliegt und die Hauptstrombahn 25 des Leistungsschalters 24 geöffnet werden muß. Hierzu steuert der Komparator 31 über einen Schaltverstärker 32 einen Auslösemagneten 33.

In Verteilern der Installationstechnik in Gebäuden mit auswechselbaren Schmelzsicherungen ist es üblich, je nach der Bauart der benutzten Schmelzsicherungen Schutzmittel in der Gestalt von Paßschrauben oder Paßhülsen zu benutzen. Beide Arten von Schutzmitteln haben die Eigenschaft, daß sie das Einsetzen einer Schmelzsicherung mit einem zu hohen Nennstrom verhindern. Dies bewährte Prinzip kann im Rahmen der Erfindung in der Weise zur Anwendung gelangen, daß bei steckbarer Ausführung des Einstellorgans für eine nachzubildende Schmelzsicherung an dem Einstellorgan ein Paßstift angebracht und in der elektronischen Auslöseeinheit ein Schutzmittel der erwähnten Art angebracht wird, das nur vom Hersteller oder einer befugten Bedienungsperson ausgetauscht werden kann.

Ein Beispiel für eine Anordnung der vorstehend erläuterten Art zeigt die Figur 4. Hierin ist ein Ausschnitt einer elektronischen Auslöseeinheit 35 dargestellt. In einer Bedienfront 36 der Auslöseeinheit 35 ist eine Aufnahmetasche 37 für ein steckbares Einstellorgan 38 angeordnet, das eine Schmelzsicherung mit einem bestimmten Bemessungsstrom repräsentiert. An der Rückseite des Einstellorgans 38 sind Kontaktstifte für einen in der Aufnahmetasche befindlichen Stecksockel 40 angeordnet, um eine Programmierung der Auslöseeinheit 35 zur Nachbildung der genannten Schmelzsicherung zu bewirken. Ferner trägt das Einstellorgan 38 einen Paßstift 41, der mit einer Paßschraube 42 zusammenwirkt. In bekannter Weise kann die Paßschraube so ausgebildet sein, daß sie nur mit einem Spezialwerkzeug zu betätigen ist. Eine noch höhere Sicherheit gegen unerwünschte bzw. unerlaubte Eingriffe ist jedoch gemäß der Figur 4 dadurch zu erreichen, daß die Paßschraube mittels einer nur an der Rückseite der Auslöseeinheit 35 zugänglichen Halteschraube 43 befestigt wird. Somit ist die Halteschraube 43 nur nach dem Ausbau der Auslöseeinheit 35 aus dem zugehörigen Leistungsschalter zu lösen, was aber erst nach Überwindung von Sicherheits- und Sperreinrichtungen möglich ist. Damit ist die Gefahr einer unzulässigen Manipulation weitgehend ausgeschlossen.

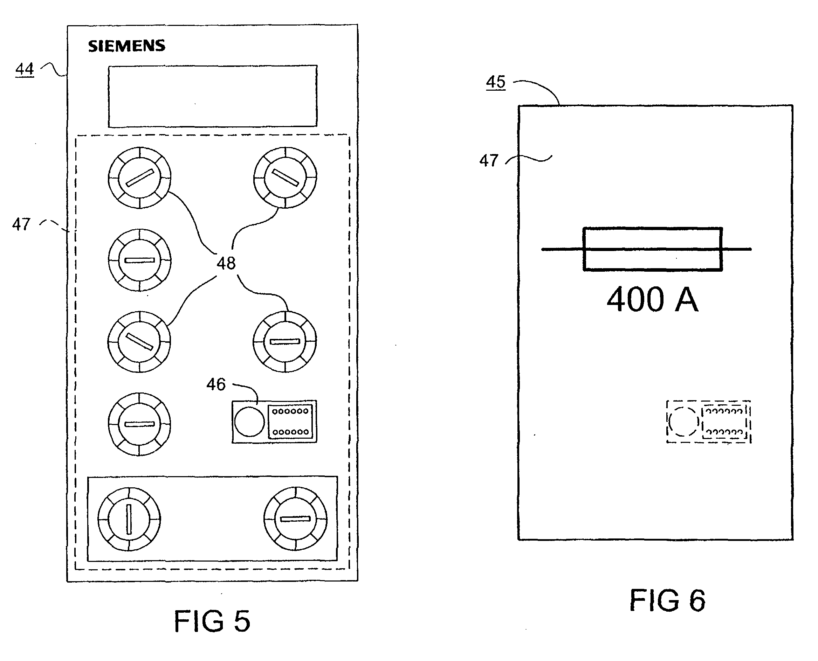

Für eine elektronische Auslöseeinheit 44, die beide erläuterte Betriebsarten ermöglicht (konventionelle Auslösekennlinie eines Leistungsschalters oder Ansprechkennlinie einer Schmelzsicherung) eignet sich die in den Figuren 5 und 6 veranschaulichte Ausführung eines steckbaren Einstellorgans 45. Dieses Einstellorgan ist in der gleichen Weise in eine Aufnahmetasche 46 einzustecken, wie das Einstellorgan 38 gemäß der Figur 4. Zusätzlich ist das Einstellorgan 45 jedoch mit einer Frontblende 47 (Figur 6) versehen, die alle übrigen Einstellorgane 48 (Figur 5) überdeckt und dem Benutzer in Verbindung mit einem auf der Frontblende befindlichen Schaltungssymbol für eine Schmelzsicherung die erfolgte Umstellung der Auslöseeinheit auf eine andere Betriebsweise verdeutlicht. In der Figur 5 ist gestrichelt der bei Benutzung des Einstellorgans 45 überdeckte Bereich angedeutet.

Wie eingangs erwähnt, sind die Ansprechkennlinien von Schmelzsicherungen in den zugehörigen Normen nur bis zu einer Auslösezeit von 100 ms definiert. Dies beruht darauf, daß die Ansprechwerte von Schmelzsicherungen in dem Bereich unterhalb von 100 ms stark schwanken. Andererseits ist der betreffende Bereich für den Schutz von Verbrauchern und Anlagen nicht unwesentlich. Eine Verbesserung des Schutzes wird durch Kennlinien nach der Figur 7 erzielt. Hierin sind Schmelzsicherungen nachgebildete Kennlinien 48, 49, 50, 51 dargestellt, die sich bis unterhalb des genannten Grenzwertes von 100 ms erstrecken. Jedoch setzen diese Kennlinien den Verlauf nicht stetig fort, sondern weisen einen Knickpunkt 52 bzw. 53 auf, von dem ausgehend der weitere Verlauf nacheilend verändert ist. Dabei liegt der Knickpunkt 52 im Zuge der Kennlinien 48, 49 und 50 bei der gleichen Ansprechzeit, während der Knickpunkt 53 im Zuge der Kennlinie 51 veränderbar ist, wie durch einen Doppelpfeil 54 angedeutet ist. Erreicht wird durch die abgeknickten Kennlinien eine Erhöhung der Selektivitätsgrenze und ein erhöhtes nominelles Schaltvermögen des Leistungsschalters, der mit diesen Kennlinien betrieben wird.

## Patentansprüche

1. Elektronische Auslöseeinheit (9, 26, 35, 44) für einen zum Ein- und Ausschalten eines Laststromkreises dienenden Leistungsschalter (2, 24) mit folgenden Merkmalen:
- eine Recheneinheit zum Vergleich von Grenzwerten eines Stromes mit einem in dem Laststromkreis fließenden Strom und zur Abgabe eines Auslösesignales zum Ausschalten des Leistungsschalters (2, 24), wenn eine dem Grenzwert zugeordnete Zeitverzögerung überschritten ist, wobei Wertepaare von Grenzwerten des Stromes und zugeordneten Zeitverzögerungen eine vorbestimmte Auslösekennlinie repräsentieren,
**gekennzeichnet durch** folgende weitere Merkmale:
- die Auslöseeinheit (9, 26, 35, 44) enthält eine Schaltungsanordnung zur Bildung einer der Ansprechkennlinie (K1) einer Schmelzsicherung (1) entsprechenden Auslösekennlinie, und
- die Auslöseeinheit (9, 26, 35, 44) ist **durch** ein Nennströme bzw. Bemessungsströme von Schmelzsicherungen repräsentierendes einzelnes Einstellorgan (21, 22, 27, 38, 45) steuerbar.

2. Elektronische Auslöseeinheit nach Anspruch 1,
**dadurch gekennzeichnet, daß**
die Recheneinheit eine Mikroprozessoreinrichtung (10) umfaßt, zu der ein Programmspeicher für Programmschritte zur taktweisen Verarbeitung von einem Stromsensor (14) erfaßter Ströme im Laststromkreis und deren Vergleich mit einer durch das Einstellorgan (22) ausgewählten Auslösekennlinie entsprechend einer Ansprechkennlinie einer Schmelzsicherung gehört.

3. Auslöseeinheit nach Anspruch 2,
**dadurch gekennzeichnet, daß**
der Mikroprozessoreinrichtung (10) ein Schreib-Lesespeicher für Wertepaare von Ansprechwerten und zugehörigen Verzögerungszeiten von Schmelzsicherungen unterschiedlicher und mittels des Einstellorgans (22) auswählbarer Schmelzsicherungen zugeordnet ist.

4. Auslöseeinheit nach Anspruch 2,
**dadurch gekennzeichnet, daß**
der Mikroprozessoreinrichtung (10) ein Funktionsgenerator zur mathematisch angenäherten Darstellung von Auslösekennlinien entsprechend den Ansprechkennlinien von Schmelzsicherungen zugeordnet ist.

5. Auslöseeinheit nach Anspruch 1,
**dadurch gekennzeichnet, daß**
ein analoger Rechenbaustein (31) zum Vergleich analoger Parameter einer mathematischen Näherungsgleichung für die Ansprechkennlinie einer Schmelzsicherung vorgesehen ist und daß das Einstellorgan (27) zur gemeinsamen Veränderung der genannten Parameter ausgebildet ist, wobei wenigstens ein von dem Strom im Laststromkreis abhängiger Parameter und ein von der Wärmebilanz eines ausgewählten Typs einer Schmelzsicherung abhängiger Parameter vorgesehen sind und der analoge Rechenbaustein (31) beim Erreichen eines positiven Schwellwertes ein Auslösesignal zur Auslösung des Leistungsschalters (24) erzeugt.

6. Auslöseeinheit nach einem der vorangehenden Ansprüche,
**dadurch gekennzeichnet, daß**
das Einstellorgan (22, 27, 38, 45) steckbar ausgebildet ist und daß an einer Bedienfront (36) der Auslöseeinheit (35) eine Aufnahmetasche (37) für das steckbare Einstellorgan (22, 38, 45) angeordnet ist, wobei das Einstellorgan (22, 38, 45) einen einzigen Nennstrom bzw. Bemessungsstrom einer Schmelzsicherung repräsentiert.

7. Auslöseeinheit nach Anspruch 6,
**dadurch gekennzeichnet, daß**
das steckbare Einstellorgan (22) einen Signalgeber zur Übergabe eines Signales an die Recheneinheit aufweist, um ausschließlich durch das Einstellorgan (22) bestimmte Auslösekennlinien entsprechend einer Schmelzsicherung zu berücksichtigen und zugleich gegebenenfalls vorhandene weitere Einstellorgane für andere Arten von Auslösekennlinien zu deaktivieren.

8. Auslöseeinheit nach Anspruch 5 oder 6,
**dadurch gekennzeichnet, daß**
das steckbare Einstellorgan (38) einen dem zugeordneten Nennstrom bzw. Bemessungsstrom entsprechenden Paßstift (41) und die Aufnahmetasche (37) eine Paßhülse (42) aufweist, die einem gewählten zulässigen Nennstrom bzw. Bemessungsstrom des Laststromkreises des Leistungsschalters (2, 24) entspricht, derart, daß ein steckbares Einstellorgan (38) mit einem über dem genannten Nennstrom bzw. Bemessungsstrom liegenden Wert nicht in Eingriff mit der Aufnahmetasche (37) zu bringen ist.

9. Auslöseeinheit nach Anspruch 8,
**dadurch gekennzeichnet, daß**
die Auslöseeinheit und das Gehäuse des Leistungsschalters mit zusammenwirkenden Kodiermitteln versehen sind.

10. Auslöseeinheit nach einem der Ansprüche 6 bis 9,
**dadurch gekennzeichnet, daß**
das steckbare Einstellorgan (45) zur Verwendung bei einer Auslöseeinheit (44), die weiteren Einstellorgane (48) für nicht der Ansprechkennlinie einer Schmelzsicherung entprechende Auslösekennlinie aufweist, das steckbare Einstellorgan (45) mit einer die genannten weiteren Einstellorgane (48) abdeckenden Frontblende (47) versehen ist.

11. Auslöseeinheit nach Anspruch 10,
**dadurch gekennzeichnet, daß**
die Frontblende (47) über die Auslöseeinheit überstehend ausgebildet ist und daß die Frontblende (47) und das Gehäuse des Leistungsschalters mit zusammenwirkenden Kodiermitteln versehen sind.

12. Auslöseeinheit nach einem der vorangehenden Ansprüche,
**dadurch gekennzeichnet, daß**
das Einstellorgan (22, 27, 38, 45) zugleich als Bemessungsstromstecker ausgebildet ist.

13. Auslöseeinheit nach einem der vorangehenden Ansprüche,
**dadurch gekennzeichnet, daß**
die nachgebildete Kennlinie unterhalb einer festgelegten Zeit nacheilend abgeknickt ausgebildet ist.

14. Auslöseeinheit nach Anspruch 13,
**dadurch gekennzeichnet, daß**
die Lage des Knickpunktes im Zuge der Auslösekennlinie einstellbar ist.

15. Auslöseeinheit nach Anspruch 13,
**dadurch gekennzeichnet, daß**
die Lage des Knickpunktes im Zuge der Auslösekennlinie in Abhängigkeit von der Baugröße des Leistungsschalters gewählt ist.

## Claims

1. An electronic tripping unit (9, 26, 35, 44) for a circuit-breaker (2, 24) serving to switch a load circuit on and off, with the following features:
- a computing unit for comparing limiting values of a current with a current flowing in the load circuit and for emitting a tripping signal for the purpose of switching the circuit-breaker (2, 24) off if a time-delay assigned to the limiting value is exceeded, whereby pairs of limiting values of the current and assigned time-delays represent a predetermined tripping characteristic,
**characterised by** the following further features:
- the tripping unit (9, 26, 35, 44) contains a circuit arrangement for the purpose of creating a tripping characteristic corresponding to the response characteristic (K1) of a fuse (1), and
- the tripping unit (9, 26, 35, 44) is capable of being controlled by an individual adjusting element (21, 22, 27, 38, 45) representing nominal currents or rated currents of fuses.

2. Electronic tripping unit according to Claim 1,
**characterised in that**
the computing unit comprises a microprocessor device (10), to which there pertains a program memory for program steps for the clock-pulsed processing of currents in the load circuit registered by a current sensor (14) and the comparison thereof with a tripping characteristic selected by the adjusting element (22) and corresponding to a response characteristic of a fuse.

3. Tripping unit according to Claim 2,
**characterised in that**
a read/write memory for value pairs of response values and associated delay-times of fuses of a variety of fuses capable of being selected by means of the adjusting element (22) is assigned to the microprocessor device (10).

4. Tripping unit according to Claim 2,
**characterised in that**
a function generator for the mathematically approximated representation of tripping characteristics corresponding to the response characteristics of fuses is assigned to the microprocessor device (10).

5. Tripping unit according to Claim 1,
**characterised in that**
an analogue computing unit (31) for comparing analogue parameters of a mathematical approximation equation for the response characteristic of a fuse is provided and **in that** the adjusting element (27) is designed for the joint amendment of the stated parameters, whereby at least one parameter dependent on the current in the load circuit and a parameter dependent on the heat balance of a selected type of fuse are provided and the analogue computing unit (31) generates a tripping signal for the purpose of tripping the circuit-breaker (24) when a positive threshold value is attained.

6. Tripping unit according to one of the preceding claims,
**characterised in that**
the adjusting element (22, 27, 38, 45) is of plug-in design and **in that** a receiving pocket (37) for the plug-in adjusting element (22, 38, 45) is arranged on an operating face (36) of the tripping unit (35), whereby the adjusting element (22, 38, 45) represents a single nominal current or rated current of a fuse.

7. Tripping unit according to Claim 6,
**characterised in that**
the plug-in adjusting element (22) comprises a signal generator for the purpose of passing a signal to the computing unit in order to take exclusive account of tripping characteristics corresponding to a fuse which have been determined by the adjusting element (22) and at the same time to deactivate further adjusting elements which are optionally present for other types of tripping characteristic.

8. Tripping unit according to Claim 5 or 6,
**characterised in that**
the plug-in adjusting element (38) comprises a mating pin (41) corresponding to the assigned nominal current or rated current and the receiving pocket (37) comprises a mating socket (42) which corresponds to a chosen permissible nominal current or rated current of the load circuit of the circuit-breaker (2, 24), in such a manner that a plug-in adjusting element (38) having a value lying above the stated nominal current or rated current cannot be brought into engagement with the receiving pocket (37).

9. Tripping unit according to Claim 8,
**characterised in that**
the tripping unit and the housing of the circuit-breaker are provided with interacting coding means.

10. Tripping unit according to one of Claims 6 to 9,
**characterised in that**
for use in connection with a tripping unit (44) which comprises further adjusting elements (48) for tripping characteristics not corresponding to the response characteristic of a fuse, the plug-in adjusting element (45) is provided with a front panel (47) covering the stated further adjusting elements (48).

11. Tripping unit according to Claim 10,
**characterised in that**
the front panel (47) is designed to project beyond the tripping unit and **in that** the front panel (47) and the housing of the circuit-breaker are provided with interacting coding means.

12. Tripping unit according to one of the preceding claims,
**characterised in that**
the adjusting element (22, 27, 38, 45) is designed at the same time as a rating plug.

13. Tripping unit according to one of the preceding claims,
**characterised in that**
the simulated characteristic curve is kinked in lagging manner below a defined time.

14. Tripping unit according to Claim 13,
**characterised in that**
the location of the kink-point within the path of the tripping characteristic is adjustable.

15. Tripping unit according Claim 13,
**characterised in that**
the location of the kink-point within the path of the tripping characteristic is chosen as a function of the physical size of the circuit-breaker.

## Revendications

1. Unité de déclenchement électronique (9, 26, 35, 44) pour un sectionneur de puissance (2, 24) servant à connecter et déconnecter un circuit de courant de charge avec les caractéristiques suivantes :
- une unité de calcul pour comparer des valeurs limites d'un courant avec un courant passant dans le circuit de courant de charge et pour délivrer un signal de déclenchement pour déconnecter le sectionneur de puissance (2, 24) lorsqu'un retard associé à la valeur limite est dépassé, des couples de valeurs limites du courant et des retards associés représentant une courbe caractéristique de déclenchement prédéterminée,
**caractérisée par** les autres caractéristiques suivantes :
- l'unité de déclenchement (9, 26, 35, 44) contient un circuit pour former une courbe caractéristique de déclenchement correspondant à la courbe caractéristique de réponse (K1) d'un fusible (1), et
- l'unité de déclenchement (9, 26, 35, 44) peut être commandée par un seul organe de réglage (21, 22, 27, 38, 45) représentant des courants nominaux ou des courants de dimensionnement de fusibles.

2. Unité de déclenchement électronique selon la revendication 1,
**caractérisé par le fait que** l'unité de calcul comprend un dispositif à microprocesseur (10) auquel appartient une mémoire de programme pour des étapes de programme destinées au traitement cadencé de courants détectés par un capteur de courant (14) dans le circuit de courant de charge et à leur comparaison avec une courbe caractéristique de déclenchement, sélectionnée par l'organe de réglage (22), correspondant à une courbe caractéristique de réponse d'un fusible.

3. Unité de déclenchement selon la revendication 2,
**caractérisée par le fait qu'**il est associé au dispositif à microprocesseur (10) une mémoire à lecture-écriture pour des couples de valeurs de réponse et des retards associés de fusibles différents et pouvant être sélectionnés au moyen de l'organe de réglage (22).

4. Unité de déclenchement selon la revendication 2,
**caractérisée par le fait qu'**il est associé au dispositif à microprocesseur (10) un générateur de fonction pour la représentation mathématiquement approchée de courbes caractéristiques de déclenchement correspondant aux courbes caractéristiques de réponse de fusibles.

5. Unité de déclenchement selon la revendication 1,
**caractérisée par le fait qu'**un module de calcul analogique (31) est prévu pour la comparaison de paramètres analogiques d'une équation d'approximation mathématique pour la courbe caractéristique de réponse d'un fusible et que l'organe de réglage (27) est conçu pour la modification commune desdits paramètres, au moins un paramètre dépendant du courant dans le circuit de courant de charge et un paramètre dépendant du bilan thermique d'un type sélectionné de fusible étant prévus et le module de calcul analogique (31) produisant un signal de déclenchement pour déclencher le sectionneur de puissance (24) lorsqu'une valeur de seuil positive est atteinte.

6. Unité de déclenchement selon l'une des revendications précédentes,
**caractérisée par le fait que** l'organe de réglage (22, 27, 38, 45) est conçu enfichable et qu'une poche de logement (37) pour l'organe de réglage enfichable (22, 38, 45) est agencée sur la face de commande (36) de l'unité de déclenchement (35), l'organe de réglage (22, 38, 45) représentant un seul courant nominal ou courant de dimensionnement d'un fusible.

7. Unité de déclenchement selon la revendication 6,
**caractérisée par le fait que** l'organe de réglage enfichable (22) comporte un transmetteur de signal pour transmettre un signal à l'unité de calcul afin de prendre en compte exclusivement des courbes caractéristiques de déclenchement déterminées par l'organe de réglage (22) selon un fusible et de désactiver en même temps d'autres organes de réglage éventuellement présents pour d'autres types de courbes caractéristiques de déclenchement.

8. Unité de déclenchement selon la revendication 5 ou 6,
**caractérisée par le fait que** l'organe de réglage enfichable (38) comporte un boulon d'ajustage (41) correspondant au courant nominal ou courant de dimensionnement associé et que la poche de logement (37) comporte une vis de calibrage (42) qui correspond à un courant nominal ou courant de dimensionnement autorisé sélectionné du circuit de courant de charge du sectionneur de puissance (2, 24) de telle sorte qu'un organe de réglage enfichable (38) avec une valeur se trouvant au-delà dudit courant nominal ou courant de dimensionnement ne peut pas être mis en prise avec la poche de logement (37)

9. Unité de déclenchement selon la revendication 8,
**caractérisée par le fait que** l'unité de déclenchement et le boîtier du sectionneur de puissance sont munis de moyens de codage coopérants.

10. Unité de déclenchement selon l'une des revendications 6 à 9,
**caractérisée par le fait que** l'organe de réglage enfichable (45), pour une utilisation avec une unité de déclenchement (44) qui comporte d'autres organes de réglage (48) pour une courbe caractéristique de déclenchement ne correspondant pas à la courbe caractéristique de réponse d'un fusible, est muni d'un cache frontal (47) recouvrant lesdits autres organes de réglage (48).

11. Unité de déclenchement selon la revendication 10,
**caractérisée par le fait que** le cache frontal (47) est conçu de manière à déborder de l'unité de déclenchement et que le cache frontal (47) et le boîtier du sectionneur de puissance sont munis de moyens de codage coopérants.

12. Unité de déclenchement selon l'une des revendications précédentes,
**caractérisée par le fait que** l'organe de réglage (22, 27, 38, 45) est conçu en même temps comme connecteur de courant de dimensionnement.

13. Unité de déclenchement selon l'une des revendications précédentes,
**caractérisée par le fait que** la courbe caractéristique reproduite est conçue, en dessous d'un temps fixé, infléchie avec un retard.

14. Unité de déclenchement selon la revendication 13,
**caractérisée par le fait que** la position du point d'inflexion au cours de la courbe caractéristique de déclenchement peut être réglée.

15. Unité de déclenchement selon la revendication 13,
**caractérisée par le fait que** la position du point d'inflexion au cours de la courbe caractéristique de déclenchement est choisie en fonction de la dimension du sectionneur de puissance.
